Europäisches Patentamt

**European Patent Office**

Office européen des brevets

(19)

(11) Publication number: **0 226 291
B1**

# EUROPEAN PATENT SPECIFICATION

(12)

(45) Date of publication of the patent specification:
**03.10.90**

(51) Int. Cl.⁵: **C25B 1/46**, C25B 1/04,
C25B 15/00

(21) Application number: **86307882.0**

(22) Date of filing: **10.10.86**

(54) **Method for extending service life of a hydrogen-evolution electrode.**

(30) Priority: **11.10.85 JP 224906/85**

(43) Date of publication of application:
**24.06.87 Bulletin 87/26**

(45) Publication of the grant of the patent:
**03.10.90 Bulletin 90/40**

(84) Designated Contracting States:
**DE FR GB IT NL SE**

(56) References cited:
**EP-A- 0 004 169
EP-A- 0 126 189
DE-B- 701 803
FR-A- 910 583
LU-A- 84 466
US-A- 4 105 516
US-A- 4 292 159**

(73) Proprietor: **ASAHI KASEI KOGYO KABUSHIKI KAISHA,
2-6, Dojimahama 1-chome Kita-ku, Osaka(JP)**

(72) Inventor: **Kashiwada, Akio, 2203 Showamachi 2-Chome,
Nobeoka-shi Miyazaki-ken(JP)**
Inventor: **Noaki, Yasuhide, 4-1 Midorigaoka 2-Chome,
Nobeoka-shi Miyazaki-ken(JP)**

(74) Representative: **Blake, John Henry Francis et al,
BROOKES AND MARTIN High Holborn House 52/54 High
Holborn, London WC1V 6SE(GB)**

## Description

### BACKGROUND OF THE INVENTION

The present invention relates to a method for extending the service life of a hydrogen-evolution electrode which exhibits low hydrogen overvoltage. More particularly, the present invention is directed to a method for extending the service life of a hydrogen-evolution electrode having an active coating layer comprising a metal oxide as the active material on an electrically conductive substrate for use in electrolytic preparation of hydrogen in alkali electrolyte.

In the field of electrolysis of brine and water, for a long period of time, many proposals concerning a hydrogen-evolution electrode have been made from viewpoints of low hydrogen overvoltage and high stability. For example, in order to decrease the hydrogen overvoltage of an electrode attempts have been made to increase the surface area of the electrode or to incorporate an electrode catalyst such as a transition metal, an alloy or an oxide of a transition metal into the electrode. Among the heretofore proposed electrodes, in which a metal, or an alloy is employed as the active material have reduced service life in that when electrolysis is continuously effected using the electrode as a hydrogen-evolution electrode, the hydrogen overvoltage of the electrode increases with the lapse of time, and the activity of the electrode is lost. Recently, there have been proposed some methods in order to improve this advantage.

US Patent 4,436,599 teaches a process for making an iron activated cathode during the operation of a chloralkali cell which comprises adding to the cathode compartment an aqueous solution containing ferrite ions and passing an electric current through the cell.

US Patent 4,105,516 discloses, that in order to reduce a cell voltage, a compound of a transition metal such as chromium, molybdenum, manganese, technetium, rhenium, iron, cobalt, ruthenium, rhodium, palladium, osmium and iridium is added to the catholyte solution, while an electrical current is being passed. This deposits the transition metal onto the cathode, and thereby maintaining a clean transition metal surface on the cathode during electrolysis. Further, there has been proposed a method for extending the life of metal cathodes by adding a reducing agent such as $Na_2SO_3$, urea and nickel to an electrolyte solution during the period of interrupted current flow to prevent the formation of chlorates (US Patents 4,358,353 and 4,055,476). In spite of these improvements of metal cathodes, further research and development have been continued on cathodes which have a metal oxide as the active material. For examples, US Patents 4,243,497, 4,394,231, 4,447,302 and 4,605,484 propose oxide cathodes characterized in a composition of oxides, comprising a surface structure and a preparation thereof. And US Patent 4,426,269 (PCT/GB79/00040) proposes recently, in order to prevent the decrease of the activity of an electrode which if left immersed in solution on an open circuit, a molybdenum, vanadium or tungsten compound is added to the electrolyte.

In spite of these proposals, there remains a demand for an electrode which exhibits high stability for long period of time or the method for extending the life of the electrode for a practical industrial use because it is inevitable that the activity of the electrode which has a metal oxide as the active material decreases substantially when the electrode is continuously used in electrolysis for period of one year or more.

### SUMMARY OF THE INVENTION

According to the present invention there is provided a method for extending the service life of a hydrogen-evolution electrode comprising an electrically conductive substrate having thereon a coating comprising a metal oxide in which said electrode is used in an alkaline electrolyte for hydrogen-evolution, comprising adding at least one component selected from titanium, niobium, indium, cadmium or antimony to the alkaline electrolyte during the course of the evolution of hydrogen.

The foregoing and other features and advantages of the present invention will be apparent to those skilled in the art from the following detailed description taken together with the accompanying drawings.

### BRIEF DESCRIPTION OF THE DRAWINGS

Fig 1 is a graph showing the relationship between the hydrogen overvoltage and the operation period of electrolysis of Example 1 and Comparative Example 1.

Fig 2 is a graph showing the relationship between the degree of oxidation and the operation period of electrolysis of Example 1 and Comparative Example 1.

### DETAILED DESCRIPTION OF THE INVENTION

The present invention provides a method for extending the service life of a hydrogen-evolution electrode comprising an electrically conductive substrate having thereon a coating comprising a metal oxide as the active material which is used for hydrogen-evolution in an alkaline electrolyte, comprising adding at least one component selected from titanium, niobium, indium, cadmium or antimony to the alkaline electrolyte during the course of the evolution of hydrogen.

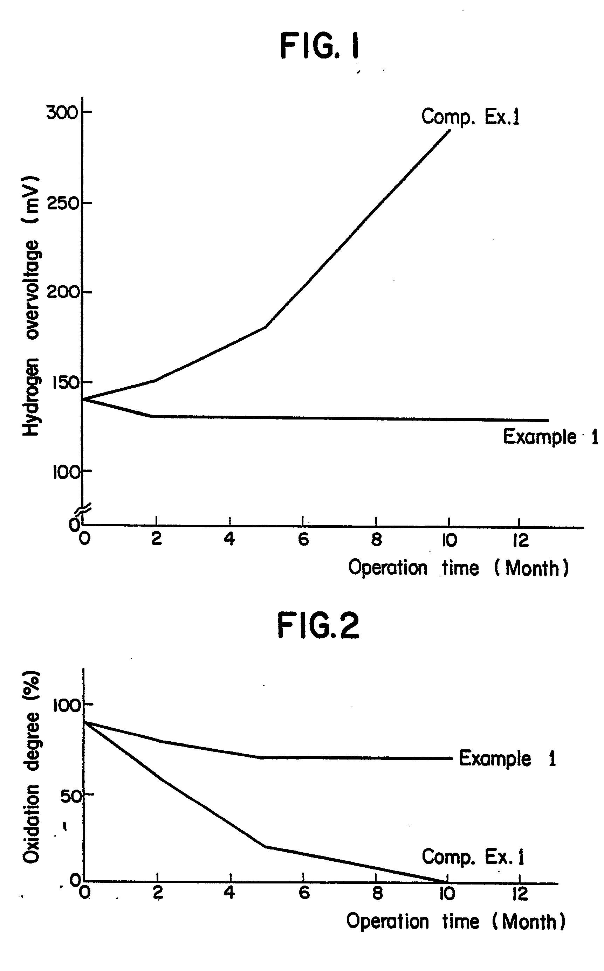

In accordance with the present invention, the hydrogen overvoltage at the initial stage of electrolysis is substantially maintained for a long period. And the degree of oxidation of the electrode is hardly decreased so that the metal oxide as the active material in the electrode is hardly reduced and remains as an oxide even after the continuous operation of electrolysis. It is therefore possible to extend the service life of the electrode. The mechanism of such features are not clearly understood but it is believed that the component added to an alkaline electrolyte prevents, directly or indirectly the reduction of a metal oxide working as an active material because the component is observed in the coating of the electrode used in the present invention. These features are illustratively shown in Fig 1 and Fig 2 which are based on the results of Example 1 and Comparative Example 1. In a case of Example 1, by the addition of $1.6 \times 10^{-2}$mmol of a titanium compound to an alkaline electrolyte, the degree of oxidation decreases, slightly, about 10% after an operation of 10 months and the hydrogen overvoltage is hardly changed. On the other hand, in Comparative Example 1, the degree of oxidation is considerably decreased during the course of electrolysis, all the metal oxide of the electrode is reduced to its metal after an operation of 10 months and the hydrogen overvoltage increases about 150 mV from the initial value.

In the present invention, a hydrogen-evolution electrode means the electrode which comprises an electrically conductive substrate having thereon a coating comprising a metal oxide, and shows a low hydrogen overvoltage when the electrode is used in evolution of hydrogen. As the metal oxide, there may be a single oxide, a mixture of two or more oxides, a double oxide and a solid solution or an amorphous oxide composed of two or more oxides. The metal oxide could also contain a small amount of the metal itself. Examples of the metal element which comprises the metal oxide, are iron, cobalt, nickel, manganese, chromium, molybdenum, tungsten, vanadium. niobium. tantalum. titanium, zirconium, copper, silver, gold, zinc, cadmium, aluminum, gallium, tin, ruthenium, rhodium, palladium, osmium, iridium and platinum. Preferred oxides are nickel oxide, cobalt oxide and an oxide composed of a combination of (i) a nickel and chromium component, (ii) a cobalt and chromium component, (iii) a nickel and titanium component, (iv) a cobalt and titanium component or (v) a nickel, chromium and titanium component disclosed in Japanese Patent Appln. 225424/1985. More preferred are nickel oxide, an oxide composed of a nickel and chromium component in which the content of chromium is in the range of 0.5 to 20 atomic % and an oxide composed of a nickel, chromium and titanium component in which the contents of chromium and titanium are in the range of 0.5 to 40 atomic % and 0.1 to 10 atomic %, respectively (above the Japanese Patent Appln.). The atomic percent in the present invention is analyzed by the atomic absorption method by the following formula (1);

$$\frac{A_M}{A_T} \times 100 \qquad \ldots\ldots\ldots\ldots\ldots\ldots \quad (1)$$

wherein $A_M$ represents the number of the specific component in the coating, and $A_T$ represents the total number of all of the components in the coating.

The term "degree of oxidation" used herein is intended to indicate the value (%) of the formula

$$\frac{H_1}{H_1 + H_0} \times 100$$

wherein $H_0$ represents the height of a peak of the highest intensity X-ray diffraction line of a metal when the coating is analyzed by X-ray diffractometry, or in case the coating contains two or more metals, represents the sum of the heights of peaks of the highest intensity X-ray diffraction lines respectively of metals; $H_1$ represents the height of a peak of the highest intensity X-ray diffraction line of an oxide of said metal, or represents the sum of the heights of peaks of the highest intensity X-ray diffraction lines respectively of the metal oxides in case the coating contains oxide of two or more metals.

In the present invention, the degree of oxidation is preferably more than 20%, more preferably more than 30%. When the degree is less than 20%, the activity of the metal portion of the coating of the electrode becomes easily low during the course of electrolysis, causing the activity of the electrode as a whole to be decreased and it is meaningless and difficult to extend the service life of the electrode.

A component to be added into an alkaline electrolyte during operation in order to extend the service life of an electrode, is one component selected from a titanium, niobium, indium, cadmium, or antimony component. Among them, a titanium component is preferable. If the component is soluble in an alkaline electrolyte, it is used unrestrictedly as all forms of the element. Preferable example is a form of metal, a metal oxide and a metal ion. An amount of the component in the electrolyte is preferably in the range of $1 \times 10^{-3}$mmol to the saturation solubility of the component per one liter of the electrolyte. When the concentration is small; less than $1 \times 10^{-3}$mmol, improvement of service life may be obtained but is not as good.

The addition of the component to the electrolyte has to be conducted during the course of working of electrode and hydrogen-evolution. When the electrode is dipping into a solution containing the component, and then is used in the electrolysis without the addition of the component, the metal oxide of the electrode is reduced to a metal so that effect of service life is not obtained.

The addition of the component may be conducted continuously or intermittently when the electrode is in a working state. In a case of an intermittent addition, it is possible to add the component at an interval of several hours, several days or one or two months.

As illustrated above, a hydrogen-evolution electrode having a metal oxide as an active material in the present invention is not limited by the method of preparing the electrode. For example , as a method of preparing a coating containing an active metal oxide may be a method comprising applying onto the substrate a homogeneous solution containing a salt of a metal, followed by baking in an oxygen-containing atmosphere; a method comprising melt-spraying, such as plasma spraying and flame spraying, a powder of a metal or a compound of a metal capable of forming such an oxide; and a method comprising electroplating and/or chemical plating of the substrate in a homogeneous solution containing a salt of a metal, followed by oxidative-calcination in an oxygen-containing atmosphere.

Of these methods, the method comprising melt-spraying is most preferable, for it ensures complete coating with a predetermined composition and gives an electrode having a high activity which can be utilized for a prolonged period of time. Illustratively stated, according to this method, the operations of melting of the powder and solidification and coating formation of the melted material on the substrate can be accomplished instantaneously. Hence, a non-stoichiometric composition tends to be formed. This is believed to be the reason why an electrode coating having a high activity can be obtained by melt-spraying. Moreover, a uniform composition consisting of a plurality of components may be obtained with certainty by the use of relatively easy and secure techniques, such as mixing and granulation. By melt-spraying such a uniform composition, it is possible to obtain the desirable electrode coating freely. Therefore, the melt-spraying method is one of the most suitable methods for the purpose of the present invention, which is to provide a hydrogen-evolution electrode, with a coating of a metal oxide thereon, having a high activity and long life. With respect to the melt-spraying method, it is important to improve the affinity between the active material of the electrode and the material giving reduction resistance thereto so that they may fully exhibit their respective functions.

In the method of melt-spraying, the powder of a metal or a compound, is preferably granulated as described in U.S. Patent 4,605,484.

The preferred thickness of the coating of electrode is 10 to 300 μm. Where the thickness of the coating is less than 10 μm, there cannot be obtained an electrode exhibiting a satisfactorily lowered hydrogen overvoltage. On the other hand, the increase in thickness of the coating to more than 300 μm is not advantageous from an economical viewpoint because even if the coating thickness is more than 300 μm, the hydrogen overvoltage does not exceed a certain value and the increase of thickness of the coating to more than 300 μm only causes the cost for the coating to be increased without any proportional advantage.

It is preferable to subject an electrically conductive substrate to a pre-treatment prior to melt-spraying. The pre-treatment consists in degreasing and grinding the surface of substrate. By the pre-treatment, the stains on the surface of substrate are removed and the surface of substrate is appropriately coarsened, thereby enabling strong bonding between the substrate and the melt-sprayed coating to be obtained. With respect to the method of pre-treatment, there is not any particular restriction. Usually, there may be employed grinding by an acid-etching, a blast finishing (for example, grit blasting, shot blasting, sand blasting or liquid honing), an electrolytic grinding or the like in combination with degreasing by means of an organic liquid, a surfactant, vapor, calcination or the like.

Explanation will now be made of an electrically conductive substrate to be used in the present invention. The electrically conductive substrate of electrode should be sufficiently resistant to an electrolytic solution not only at a potential of the substrate during the electrolysis but also at a potential of the substrate at the time when the electrolysis is not effected. The surface of a substrate having an active, porous coating thereon has a potential which is noble as compared with the potential on the surface of the coating even during a period of time in which hydrogen is evolved from the surface of the coating of the electrode. Therefore, it is not unusual that the potential at the surface of the substrate is noble as compared with the dissolution-deposition equilibrium potential of iron. For this reason, when iron is used as the substrate of electrode, the iron is corroded and dissolved out from the surface of the substrate. As a result, the electrolytic solution and the electrode coating are contaminated and, in an extreme case, the coating of electrode is caused to be exfoliated and comes off from the surface of electrode so that the activity of the electrode is greatly decreased. As examples of the material which has an anticorrosive property sufficient for use as the substrate of electrode of the present invention and is commercially easily available, there may be mentioned, for example, nickel, a nickel alloy, an austenite type stainless steel and a ferrite type stainless steel. Of the above-mentioned materials, nickel, a nickel alloy and an austenite type stainless steel are preferred, and nickel and a nickel alloy are particularly preferred. Besides, those which each are composed of an electrically conductive substrate having on its surface a non-pinhole coating or nickel, a nickel alloy, an austenite type stainless steel or a ferrite type stainless steel may also preferably be used as the substrate of electrode. Such a non-pinhole and anticorrosive coating may be obtained by known techniques, for example, electroplating, electroless plating, melt-plating, rolling, pressure-adhesion by explosion, clothing of metal, vapor deposition, ionization plating and the like.

The preferred shape of the substrate of electrode is of such a structure that hydrogen gas generated during the electrolysis is smoothly released so that a superfluous voltage loss due to the current-shielding by the hydrogen gas may be avoided and that the effective surface area for electrolysis is large so that the current is hardly concentrated. The substrate having such a shape as mentioned above may be made of a wire screen having a suitable wire diameter and spacing between the mutually adjacent wires, a perforated metal having a suitable thickness, size of opening and pitch of opening arrangement, an expanded metal having suitable lengths of long axis and short axis, or the like.

The present invention can be effectively applied for the hydrogen-evolution electrode used as a cathode in the electrolysis of sodium chloride by the ion exchange membrane process or the diaphragm process, electrolysis of alkali metal halides other than sodium chloride, electrolysis of water, electrolysis of Glauber's salt and the like. The electrolytic solution in contact with the electrode of the present invention is alkaline. The type of electrolytic cell to be used together with the electrode in the present invention may be either monopolar arrangement or bipolar arrangement. When the electrode of the present invention is used in the electrolysis of water, it may be used as a bipolar electrode.

The present invention will be further illustrated in more detail with reference to the following Examples which should not be construed to be limiting the scope of the present invention.

In the Examples, various measurements were done as follows.

The content of each of the components in the coating of an electrode is determined by the ICAP (Inductively Coupled Argon Plasma Emission Spectrophtometry) method as follows.

One part by weight of the coating of an electrode is mixed with 50 parts by weight of a flux (a mixture of 2 parts by weight of sodium peroxide and one part by weight of sodium carbonate) and the resulting mixture is melted. A predetermined amount of hot water and aqueous 50% sulfuric acid are added to the resulting mixture to obtain a homogeneous solution. The obtained solution is analyzed by a ICAP-575-Mark II (manufactured by Nippon Jarrell-Ash Co., Ltd., Japan).

Example 1 and Comparative Example 1

100 Parts by weight of powder nickel oxide (NiO) were added to an aqueous solution consisting of 100 parts by weight of water, 2.25 parts by weight of gum arabic as a binder, 0.7 part by weight of sodium carboxymethyl cellulose as a dispersant, 0.001 part by weight of sodium lauryl sulfate as a surfactant and 0.1 part by weight of phenol as an antiseptic agent. The resulting mixture was vigorously stirred to obtain a homogeneous suspension. The particle diameters of the nickel oxide showed 0.2 to 2 μm by the analysis of an electron photomicrograph.

The thus obtained suspension was dried and granulated by means of a spray dryer type granulation machine to obtain a spherical granules having a diameter of 5 to 50 μm and containing less than 0.1% of water.

A 5 cm x 5 cm nickel wire screen (wire diameter, 0.7 mm; 12 mesh) was degreased with trichloroethylene, and then blasted by means of $Al_2O_3$. The blasted wire screen (substrate) was melt spray coated on each side thereof with the above-prepared granules by plasma spraying as indicated below.

Feeding rate of plasma gas of argon and nitrogen: 1 m³ (at normal state)/h and 0.8 m³ (at normal state)/h, respectively

Distance between substrate and spray gun (spray distance): 10 cm Angle of the plasma flame relative to the face of the substrate: 90°

The thickness of the coating on the front of the wire screen was 100 μm and on the back was 50 μm. The analysis by x-ray diffractometry showed that the coating of the electrode contained nickel oxide (NiO) and metal nickel (Ni).

There was provided an electrical cell which was partitioned by a cation exchange membrane having a carboxylic acid layer and a sulfonic acid layer into a cathode chamber and an anode chamber accommodating therein an anode made of a titanium expanded metal having thereon a coating composed of ruthenium oxide, titanium oxide and zirconium oxide.

In the cell, the above described nickel-oxide coated electrode was used as cathode with its front side facing the carboxylic acid layer of the membrane. Brine having a NaCl concentration of 175 g/l was supplied to the anode chamber. 30% aqueous sodium hydroxide solution containing titanium at $1.6 \times 10^{-2}$ mmol per on liter of the solution by the addition of a titanium sulfate was supplied in the cathode chamber. Electrolysis was continuously conducted at a current density of 40 A/dm² and at 90°C. The hydrogen overvoltage was measured by the current interrupt method and in a manner in which a Luggin capillary of Teflon was connected to a reference electrode (Hg/HgO). The degree of oxidation was measured by calculation from the height of the peak attributed to crystal face (012) with respect to NiO and the height of the peak attributed to crystal face (111) of Ni by X-ray diffraction.

In order to show the effect of the example, the Comparative example was conducted by the same manner with the Example 1 except that the addition of a titanium sulfate was not conducted. The results are shown in the Table 1.

## Table 1

| | | At initial stage | After 2 months | After 5 months | After 10 months |
|---|---|---|---|---|---|
| Ex. 1 | Hydrogen overvoltage $(40A/dm^2)$ | 140 mV | 130 mV | 130 mV | 130 mV |
| | Oxidatn. degree [NiO/(NiO+Ni)] | 90 % | 80 % | 70 % | 70 % |
| Comp. Ex. 1 | Hydrogen overvoltage $(40A/dm^2)$ | 140 mV | 150 mV | 180 mV | 290 mV |
| | Oxidatn. degree [NiO/(NiO+Ni)] | 90 % | 60 % | 20 % | 0 % |

EP 0 226 291 B1

As shown in Table 1, in Example 1, although the degree of oxidation decreased about 20% after 10 months, the hydrogen overvoltage changed only small degree.

In Comparative Example 1, the drop of the oxidation degree was very large, and all of the nickel oxide was reduced to a nickel metal after 10 months. The hydrogen overvoltage increased about 150 mV in comparison with at the initial stage.

Examples 2 to 5

The same procedures with Example 1 were conducted emloying some different amounts of titanium content. The results are shown in Table 2.

Table 2

| Example | The amount of Ti content (mmol/ℓ) | | At initial stage | After 5 months | After 10 months |
|---|---|---|---|---|---|
| 2 | $2 \times 10^{-3}$ | Hydrogen overvoltage (40A/dm2) | 140 mV | 140 mV | 150 mV |
| | | Oxidtn. degree [NiO/(NiO+Ni)] | 90 % | 60 % | 50 % |
| 3 | $8 \times 10^{-2}$ | Hydrogen overvoltage (40A/dm$^2$) | 130 mV | 120 mV | 120 mV |
| | | Oxidtn. degree [NiO/(NiO+Ni)] | 90 % | 70 % | 70 % |
| 4 | 0.25 | Hydrogen overvoltage (40A/dm$^2$) | 130 mV | 120 mV | 120 mV |
| | | Oxidtn. degree [NiO/(NiO+Ni)] | 90 % | 75 % | 70 % |
| 5 | 0.40 | Hydrogen overvoltage (40A/dm$^2$) | 130 mV | 120 mV | 120 mV |
| | | Oxidtn. degree [NiO/(NiO+Ni)] | 90 % | 75 % | 72 % |

In example 5, although a white turbidity was observed in the catholyte since the amount of the titanium component was more than the saturation solubility, the other results were good.

Examples 6 to 8 and Comparative Examples 2 to 4

Three kinds of electrode as described below were prepared in substantially the same manner as described in Example 1 employing the following compounds as the raw materials of the coating;
Raw material

(a) nickel oxide powder (NiO) having particle diameter of 0.2 to 2 μm
(b) chromium oxide powder ($Cr_2O_3$) having particle diameter of 0.5 to 3 μm
(c) titanium oxide powder ($TiO_2$) having particle diameter of 1.0 to 10 μm

Electrodes

In Example 6: a nickel oxide-chromium coated electrode having 5 mol% of chromium in the coating
In Example 7: a nickel oxide-chromium coated electrode having 3 mol% of chromium in the coating
in Exmaple 8: a nickel oxide-chromium titanium coated electrode having 20 mol% of chromium and 2 mol% of titanium in the coating

On the other hand, a spherical sintering material having diameter of 5 to 10 mm was prepared by a heat treatment of titanium oxide under the condition of 600°C and 4 hours. By employing the electrode obtained above, electrolysis was conducted as the same manner with Example 1 except that the concentration of titanium ion in the catholyte was controlled to about $5 \times 10^{-2}$ mmol by dipping and dissolving the sintering material in the catholyte.

In comparative examples, electrolysis was conducted without using the sintering material. The results are shown in Table 3. By X-ray diffractometry analysis, the coating of the electrode used in the electrolysis for 20 months was found to be composed of NiO and Ni. and X-ray diffraction peaks to be attributed to chromium and titanium components were not observed.

Table 3

| | Composition of coating of electrode | Concentration of a titanium ion | | At initial stage | After 20 months |
|---|---|---|---|---|---|
| Example 6 | NiO–Cr type Cr content = 5 mol% | about $5 \times 10^{-2}$ mmol/$\ell$ | Hydrogen overvoltage (40 A/dm$^2$) | 150 mV | 140 mV |
| | | | Oxidation degree [NiO/(NiO+Ni] | 90 % | 60 % |
| Comp.Example 2 | ibid | not observed | Hydrogen overvoltage (40A/dm$^2$) | 150 mV | 240 mV |
| | | | Oxidation degree [NiO/(NiO+Ni)] | 90 % | 16 % |
| Example 7 | NiO–Ni type Ti content = 3 mol% | about $5 \times 10^{-2}$ mmol/$\ell$ | Hydrogen overvoltage (40A/dm$^2$) | 150 mV | 140 mV |
| | | | Oxidation degree [NiO/(NiO+Ni)] | 90 % | 50 % |
| Comp.Example 3 | ibid | not observed | Hydrogen overvoltage (40A/dm$^2$) | 150 mV | 240 mV |
| | | | Oxidation degree [NiO/(NiO+Ni)] | 90 % | 15 % |
| Example 8 | NiO–Cr–Ti type Cr content = 20 mol% Ti content = 2 mol% | about $5 \times 10^{-2}$ mmol/$\ell$ | Hydrogen overvoltage (40A/dm$^2$) | 160 mV | 140 mV |
| | | | Oxidation degree [NiO/(NiO+Ni)] | 90 % | 80 % |
| Comp.Example 4 | ibid | not observed | Hydrogen overvoltage (40A/dm$^2$) | 160 mV | 140 mV |
| | | | Oxidation degree [NiO/(NiO+Ni)] | 90 % | 73 % |

EP 0 226 291 B1

Examples 9 to 12 and Comparative Examples 5 to 24

Electrolysis was conducted in substantially the same manner described in Example 1 except that a compound of respectively niobium, indium, cadmium or antimony was used instead of a titanium compound, in Examples 9 to 12. In comparison Examples 5 to 24, the many compounds described in Table 4 were used instead of a titanium compound. The compound was added to the catholyte as an acidic solution of a chloride, oxide, nitrate or fluoride to give a concentration of $1.6 \times 10^{-2}$ mmol/l in the catholyte. The results are shown in Table 4. Examples 9 to 12 show that Oxidation degrees decrease only 20 to 25% and that hydrogen overvoltages change little. Comparative Examples 5 to 24 show that large amounts of nickel oxide were reduced to nickel metal and that hydrogen overvoltages increase about 30 to 40mV after 5 months.

Table 4

| | Added Compound | | At initial stage | After 2 months | After 5 months |
|---|---|---|---|---|---|
| Example 9 | NbC$\ell_5$ | Hydrogen overvoltage (40A/dm$^2$) | 140 mV | 130 mV | 130 mV |
| | | Oxidation degree [NiO/(NiO+Ni)] | 90 % | 80 % | 70 % |
| Example 10 | InC$\ell_3$ | Hydrogen overvoltage (40A/dm$^2$) | 140 mV | 140 mV | 130 mV |
| | | Oxidation degree [NiO/(NiO+Ni)] | 90 % | 80 % | 70 % |
| Example 11 | CdC$\ell_2$ | Hydrogen overvoltage (40A/dm$^2$) | 140 mV | 150 mV | 150 mV |
| | | Oxidation degree [NiO/(NiO+Ni)] | 90 % | 75 % | 65 % |
| Example 12 | SbC$\ell_3$ | Hydrogen overvoltage (40A/dm$^2$) | · 140 mV | 140 mV | 150 mV |
| | | Oxidation degree [NiO/(NiO+Ni)] | 90 % | 75 % | 65 % |

EP 0 226 291 B1

EP 0 226 291 B1

| | Added Compound | | At initial stage | After 2 months | After 5 months |
|---|---|---|---|---|---|
| Comp.Ex. 5 | $AlCl_3$ | Hydrogen overvoltage ($40A/dm^2$) | 140 mV | 150 mV | 180 mV |
| | | Oxidation degree [NiO/(NiO+Ni)] | 90 % | 65 % | 30 % |
| Comp.Ex. 6 | $Na_2SiO_3$ | Hydrogen overvoltage ($40A/dm^2$) | 140 mV | 150 mV | 180 mV |
| | | Oxidation degree [NiO/(NiO+Ni)] | 90 % | 60 % | 20 % |
| Comp.Ex. 7 | $NH_4VO_3$ | Hydrogen overvoltage ($40A/dm^2$) | 140 mV | 150 mV | 180 mV |
| | | Oxidation degree [NiO/(NiO+Ni)] | 90 % | 60 % | 25 % |
| Comp.Ex. 8 | $K_2Cr_2O_7$ | Hydrogen overvoltage ($40A/dm^2$) | 140 mV | 150 mV | 180 mV |
| | | Oxidation degree [NiO/(NiO+Ni)] | 90 % | 60 % | 20 % |
| Comp.Ex. 9 | $FeCl_3$ | Hydrogen overvoltage ($40A/dm^2$) | 140 mV | 150 mV | 170 mV |
| | | Oxidation degree [NiO/(NiO+Ni)] | 90 % | 65 % | 30 % |
| Comp.Ex. 10 | $CoCl_2$ | Hydrogen overvoltage ($40A/dm^2$) | 140 mV | 150 mV | 170 mV |
| | | Oxidation degree [NiO/(NiO+Ni)] | 90 % | 65 % | 30 % |
| Comp.Ex. 11 | $NiCl_2$ | Hydrogen overvoltage ($40A/dm^2$) | 140 mV | 150 mV | 180 mV |
| | | Oxidation degree [NiO/(NiO+Ni)] | 90 % | 60 % | 20 % |

| | Added Compound | | At initial stage | After 2 months | After 5 months |
|---|---|---|---|---|---|
| Comp.Ex. 12 | $CuCl_2$ | Hydrogen overvoltage $(40A/dm^2)$ | 140 mV | 150 mV | 180 mV |
| | | Oxidation degree $[NiO/(NiO+Ni)]$ | 90 % | 60 % | 30 % |
| Comp.Ex. 13 | $K_2GeO_3$ | Hydrogen overvoltage $(40A/dm^2)$ | 140 mV | 150 mV | 170 mV |
| | | Oxidation degree $[NiO/(NiO+Ni)]$ | 90 % | 60 % | 20 % |
| Comp.Ex. 14 | $As_2O_3$ | Hydrogen overvoltage $(40A/dm^2)$ | 140 mV | 150 mV | 180 mV |
| | | Oxidation degree $[NiO/(NiO+Ni)]$ | 90 % | 60 % | 20 % |
| Comp.Ex. 15 | $ZrO(NO_3)_2 \cdot 2H_2O$ | Hydrogen overvoltage $(40A/dm^2)$ | 140 mV | 150 mV | 180 mV |
| | | Oxidation degree $[NiO/(NiO+Ni)]$ | 90 % | 60 % | 20 % |
| Comp.Ex. 16 | $(NH_4)_6Mo_7O_{24}$ | Hydrogen overvoltage $(40A/dm^2)$ | 140 mV | 150 mV | 170 mV |
| | | Oxidation degree $[NiO/(NiO+Ni)]$ | 90 % | 60 % | 20 % |
| Comp.Ex. 17 | $TaF_5$ | Hydrogen overvoltage $(40A/dm^2)$ | 140 mV | 150 mV | 180 mV |
| | | Oxidation degree $[NiO/(NiO+Ni)]$ | 90 % | 60 % | 20 % |
| Comp.Ex. 18 | $MnCl_2$ | Hydrogen overvoltage $(40A/dm^2)$ | 140 mV | 150 mV | 170 mV |
| | | Oxidation degree $[NiO/(NiO+Ni)]$ | 90 % | 60 % | 20 % |

EP 0 226 291 B1

| | Added Compound | | At initial stage | After 2 months | After 5 months |
|---|---|---|---|---|---|
| Comp.Ex. 19 | $SeO_2$ | Hydrogen overvoltage $(40A/dm^2)$ | 140 mV | 150 mV | 170 mV |
| | | Oxidation degree $[NiO/(NiO+Ni)]$ | 90 % | 60 % | 30 % |
| Comp.Ex. 20 | $SnCl_2$ | Hydrogen overvoltage $(40A/dm^2)$ | 140 mV | 150 mV | 170 mV |
| | | Oxidation degree $[NiO/(NiO+Ni)]$ | 90 % | 60 % | 30 % |
| Comp.Ex. 21 | $TeCl_4$ | Hydrogen overvoltage $(40A/dm^2)$ | 140 mV | 150 mV | 180 mV |
| | | Oxidation degree $[NiO/(NiO+Ni)]$ | 90 % | 60 % | 20 % |
| Comp.Ex. 22 | $Na_2WO_4 \cdot 2H_2O$ | Hydrogen overvoltage $(40A/dm^2)$ | 140 mV | 150 mV | 180 mV |
| | | Oxidation degree $[NiO/(NiO+Ni)]$ | 90 % | 60 % | 20 % |

15

Example 13

The electrode prepared by the method of Example 1 was reduced under a hydrogen atomsphere at 300°C for 4 hours. The obtained electrode having oxidation degree of 2% below was oxidized in an air at 500°C for 3 hours. Substantially the same electrolysis as in Example 1 was repeated to effect electrolysis for evaluation of the performance of the electrode. The results are shown in Table 5.

Example 14

The electrode was prepared by the same manner with Example 1 except that a nickel powder (Ni ≥ 99%, ø = 4 ~ 7μ) was used for a melt-spray instead of a nickel oxide granule. The electrode obtained was reduced under a hydrogen atomsphere at 300°C for 4 hours to obtain a reduced electrode having oxidation degree of 0%. The reduced electrode was oxidized in an air at 500°C for 4 hours. Substantially the same electrolysis as in Example 1 was conducted to evaluate the obtained electrode. The results are shown in Table 5.

Comparative Examples 23 and 24

Substantially the same electrolyses as in Examples 13 and 14 were repeated without the addition of a titanium using the same electrodes prepared in Examples 13 and 14. The results are shown in Table 5.

Table 5

| | Hydrogen overvoltage mV (40A/dm2) | | |
|---|---|---|---|
| | At initial stage | After 2 months | After 5 months |
| Example 13 | 140 | 130 | 140 |
| Comp. Example 23 | 140 | 260 | 300 |
| Example 14 | 140 | 150 | 160 |
| Comp. Example 24 | 140 | 290 | 330 |

**Claims**

1. A method for extending the service life of an electrode used in an alkaline electrolyte for hydrogen-evolution in which said hydrogen-evolution electrode comprises an electrically conductive substrate having thereon a coating comprising a metal oxide such that the degree of oxidation of the electrode is greater than 20%, characterised in that at least one component selected from titanium, niobium, indium, cadmium or antimony or compounds thereof are added to or immersed in the alkaline electrolyte during the course of the evolution of hydrogen to inhibit the reduction of the metal oxide coating.

2. A method according to claim 1, wherein following the addition or immersion, the concentration of the said component in the alkaline electrolyte is in the range of from $1 \times 10^{-3}$ mmol to the saturation solubility of the added component per litre of electrolyte.

3. A method according to claim 1 or 2, wherein said component addition is added continuously or intermittently.

4. A method according to claim 1, 2 or 3, wherein said component comprises titanium.

5. A method according to claim 1, 2 or 3, wherein said component is a metal compound of a metal selected from titanium, niobium, indium, cadmium or antimony.

6. A method according to claim 5, wherein said compound is a sulfate, chloride, oxide, nitrate or fluoride.

7. A method according to claim 6, wherein said compound is titanium sulfate.

8. A method according to claim 6 wherein said compound is a chloride of niobium, indium, cadmium or antimony.

9. A method according to any one of claim 1 to a, wherein the metal oxide coating comprises nickel oxide.

10. A method according to any one of claims 1 to 8, wherein the metal oxide coating comprises a nickel and chromium component, in which the chromium content is in the range of 0.5 to 20 atomic %.

11. A method according to any one of the claim 1 to 8, wherein the metal oxide coating comprises nickel, chromium and titanium component in which the chromium and titanium content is in the range of 0.5 to 40 atomic % and 0.1 to 10 atomic %, respectively.

## Patentansprüche

1. Verfahren zur Verlängerung der Betriebsdauer einer Elektrode, die in einem alkalischen Elektrolyten zur Wasserstoffentwicklung verwendet wird, wobei diese Wasserstoffentwicklungselektrode ein elektrisch leitfähiges Substrat, mit einer auf diesem aufgetragenen Beschichtung, die ein Metalloxid aufweist, umfaßt, wobei der Oxidationsgrad der Elektrode höher als 20 % ist, dadurch gekennzeichnet, daß während des Verlaufs der Wasserstoffentwicklung mindestens eine unter Titan, Niob, Indium, Cadmium oder Antimon oder deren Verbindungen ausgewählte Komponente zu dem alkalischen Elektrolyten zugefügt oder in diesen eingetaucht wird, um die Reduktion der Metalloxidbeschichtung zu verhindern.

2. Verfahren nach Anspruch 1, bei dem nach dem Zufügen oder dem Eintauchen die Konzentration der Komponente in dem alkalischen Elektrolyten im Bereich von $1 \times 10^{-3}$ mMol bis zu der Sättigungslöslichkeit der zugegebenen Komponente pro Liter des Elektrolyten liegt.

3. Verfahren nach Anspruch 1 oder 2, bei dem die zugesetzte Komponente kontinuierlich oder intermittierend zugefügt wird.

4. Verfahren nach Anspruch 1, 2 oder 3, bei dem diese Komponente Titan umfaßt.

5. Verfahren nach Anspruch 1, 2 oder 3, bei dem diese Komponente eine Metallverbindung eines unter Titan, Niob, Indium, Cadmium oder Antimon gewählten Metalls ist.

6. Verfahren nach Anspruch 5, bei dem diese Verbindung ein Sulfat, Chlorid, Oxid, Nitrat oder Fluorid ist.

7. Verfahren nach Anspruch 6, bei dem diese Verbindung Titansulfat ist.

8. Verfahren nach Anspruch 6, bei dem diese Verbindung ein Chlorid des Niobs, Indiums, Cadmiums oder Antimons ist.

9. Verfahren nach einem der Ansprüche 1 bis 8, bei dem die Metalloxidbeschichtung Nickeloxid umfaßt.

10. Verfahren nach einem der Ansprüche 1 bis 8, bei dem die Metalloxidbeschichtung eine Nickel- und Chrom-Komponente aufweist, in welcher der Chromgehalt im Bereich von 0,5 bis 20 Atom-% liegt.

11. Verfahren nach einem der Ansprüche 1 bis 8, bei dem die Metalloxidbeschichtung eine Nickel-, Chrom- und Titan-Komponente aufweist, wobei der Chromgehalt im Bereich von 0,5 bis 40 Atom-% und der Titangehalt im Bereich von 0,1 bis 10 Atom-% liegt.

## Revendications

1. Procédé pour accroître la longévité d'une électrode utilisée dans un électrolyte alcalin pour le dégagement d'hydrogène, dans lequel l'électrode à dégagement d'hydrogène est constituée d'un substrat conducteur de l'électricité sur lequel est appliqué un revêtement constitué d'un oxyde métallique tel que le degré d'oxydation de l'électrode soit supérieure à 20 %, caractérisé en ce qu'il consiste à ajouter à l'électrolyte alcalin ou à y immerger au moins un constituant choisi parmi le titane, le niobium, l'indium, le cadmium, ou l'antimoine ou leurs composés, au cours du dégagement de l'hydrogène, pour inhiber la réduction du revêtement en oxyde métallique.

2. Procédé selon la revendication 1 dans lequel, à la suite de l'addition ou de l'immersion, la concentration du constituant dans l'électrolyte alcalin est comprise entre $1 \times 10^3$ mmole et la solubilité de saturation du constituant à ajouter par litre d'électrolyte.

3. Procédé suivant la revendication 1 ou 2, qui consiste à ajouter le constituant d'addition continuellement ou par intermittence.

4. Procédé suivant la revendication 1, 2 ou 3, dans lequel le constituant comprend du titane.

5. Procédé suivant la revendication 1, 2 ou 3, dans lequel le constituant est un composé métallique d'un métal choisi parmi le titane, le niobium, l'indium, le cadmium ou l'antimoine.

6. Procédé suivant la revendication 5, dans lequel le composé est un sulfate, un chlorure, un oxyde, un nitrate ou un fluorure.

7. Procédé suivant la revendication 6, dans lequel le composé est du sulfate de titane.

8. Procédé suivant la revendication 6, dans lequel le composé est un chlorure de niobium, un chlorure d'indium, un chlorure de cadmium ou un chlorure d'antimoine.

9. Procédé selon l'une quelconque des revendications 1 à 8, dans lequel le revêtement en oxyde métallique comprend de l'oxyde de nickel.

10. Procédé suivant l'une quelconque des revendications 1 à 8, dans lequel le revêtement en oxyde métallique comprend un constituant à base de nickel et de chrome, la teneur atomique en chrome étant comprise entre 0,5 et 20%.

11. Procédé suivant l'une quelconque des revendications 1 à 8, dans lequel le revêtement en oxyde métallique comprend un constituant à base de nickel, de chrome et de titane, les teneurs atomiques en chrome et en titane étant comprises respectivement entre 0,5 et 40% et entre 0,1 et 10%.

# FIG. 1

# FIG. 2